# EUROPEAN PATENT APPLICATION

(11) **EP 4 847 970 A1**
(43) Date of publication of application: **02.12.2026**
(21) Application number: 25181425.7
(22) Date of filing: 06.06.2025
(51) Int. Cl.: G01V 1/18, G01S 3/808, G01S 5/18

(54) **DEVICE FOR MEASURING ACOUSTIC DATA, SYSTEM AND A METHOD FOR DETECTING THE POSITION OF A SOURCE OF ACOUSTIC WAVES IN AN UNDERWATER ENVIRONMENT, AND METHOD FOR ASSEMBLING A DEVICE SUBJECT OF THE INVENTION**

(30) Priority: 28.05.2025 EP 25179590
(71) Applicant: Université de Toulon, 83130 La Garde (FR); Centre National de la Recherche Scientifique, 75016 Paris (FR); Universite d'Aix-Marseille, 13007 Marseille (FR)
(72) Inventor: BARCHASZ, Valentin, 83170 Brignoles (FR); GIES, Valentin, 83000 Toulon (FR); GLOTIN, Hervé, 83130 La Garde (FR); MARZETTI, Sebastian Léonardo, 83000 Toulon (FR)
(74) Representative: Cornuejols, Marine Sophie

(57) **Abstract**

A device (100) for measuring acoustic data in an underwater environment comprising :
- at least four hydrophones (108, 109, 110, 111) positioned in a tetrahedral configuration and designed to measure values representative of sound signals in the underwater environment,
- at least one inertial measuring unit (115) configured to measure values representative of orientation, position, speed and/or acceleration of the device in the underwater environment ,
- a cable (106) for transmitting each measured value to a processing device, and for providing electricity from an external power source to power each hydrophone and the inertial measuring unit, and
wherein the device is such that each hydrophone and the inertial measuring unit are immersed in a waterproof material (105) with an acoustic index corresponding to the acoustic index of the environment.

## Description

### TECHNICAL FIELD OF THE INVENTION

The present invention relates to a device for measuring acoustic data, a system and a method for detecting the position of a source of acoustic waves in an underwater environment, and a method for assembling a device subject of the invention. The present invention is applicable to the domain detection, location and tracking of sources of acoustic waves in an underwater environment such as submarines and marine animals, for example.

### BACKGROUND OF THE INVENTION

There exists different types of trackers of underwater acoustic waves sources depending on the type of source to track.

For example, for military purposes, it may be interesting to detect and track submarine activity. Such detectors can be tracked by small boats but are usually cumbersome and somewhat fragile. Therefore, they are not adapted to stealth operations. Moreover, these devices have moving parts adding errors to the estimation of the localization of a source.

For marine life tracking, there exists autonomous buoys and boats having hydrophones. However, these elements usually record data without transmission to a server. Therefore, the presence of marine life is usually known after the fact. In other examples, some elements are able to send data to a remote server. However, given the number of electronic elements the signals measured are easily unexploitable.

An example of known acoustic tracking device is shown in prior art document EP 2 850 460. However, this document requires a tracker to be placed on the shark so as to be able to follow the shark's route. It is therefore not possible to only detect that a shark is present near the device if no tracker has been placed on said shark.

### SUMMARY OF THE INVENTION

The device subject of the invention comprises at least four hydrophones and an inertial measurement unit (of acronym "IMU"). Using the hydrophones, it detects the direction of a source by measuring Time Delay Of Arrival (of acronym "TDOA") in the device's reference frame. Magnetic, gravity and rotational speed measurements are also used to find the angular position of the sensor in the terrestrial reference frame even in cases where the device subject to the invention is subject to strong movements, and by changing reference frame to find the direction of the sound source in the absolute terrestrial reference frame. The processing is carried out by the processing device equipped with a geolocation sensor that provides the sensor's absolute position in a terrestrial reference frame, enabling it to find a line on which the sound source is uniquely located in a terrestrial reference frame.

The coupling of two devices subject of the invention with at least one processing device subject of the invention makes it possible to find two lines corresponding to the same source and passing through two different points. If these two lines are not aligned, the point of intersection of these two lines is the location of the source of acoustic waves, information that can be reinforced by measuring the relative arrival times of the acoustic signal.

Moreover the device subject of the invention is very compact, lightweight, easy to set up, tractable at high speed, robust, and of excellent acoustic quality.

### SUBJECT OF THE INVENTION

The present invention is intended to remedy all or part of these disadvantages. More particularly, the present invention makes it possible to have a very small device capable of detecting a source of underwater acoustic waves with high fidelity and over a long distance.

To this effect, according to a first aspect, the present invention aims at a device for measuring acoustic data in an underwater environment comprising :
- at least four hydrophones positioned in a tetrahedral configuration and designed to measure values representative of sound signals in the underwater environment,
- at least one inertial measuring unit configured to measure values representative of orientation, position, speed and/or acceleration of the device in the underwater environment ,
- a cable for transmitting each measured value a processing device, and for providing electricity from an external power source to power each hydrophone and the inertial measuring unit, and
wherein the device is such that each hydrophone and the inertial measuring unit are immersed in a waterproof material with an acoustic index corresponding to the acoustic index of the environment.

Thanks to these dispositions, the one-piece design of the device subject of the invention means that the hydrophones and inertial measuring unit have fixed positions, with no possibility of movement. Moreover, given that the power supply is external, the device subject of the invention can have small dimensions making it harder to identify visually or by active sonar than a man-made instrument or form. As a result, the device subject of the present invention is extremely robust and cannot be inadvertently modified.

Moreover, the non-magnetic nature of the sensors, i.e., the hydrophones and the inertial measuring unit, means that it contains a minimum of ferrous metals, so as not to locally deviate the magnetic field to be measured, for example because of the Hard Iron effects. This gives very good angular positioning accuracy, less than a degree, in relation to the earth's magnetic field. It also enables detection of local magnetic anomalies, such as the presence of an iron mass, for example, or even magnetic field gradient anomalies. The sensor has neither a connector nor a battery, to avoid the presence of any ferrous mass.

Also, the index of the waterproof material used is close to that of water, to avoid interfaces between media, which would create reflections and signal weakening. Thanks to this property, the device subject of the invention is very stealthy when it comes to sonar, since it sends back virtually no signal by design. The absence of connectors prevents acoustic masking. The geometric configuration of sensors and electronic boards is designed to avoid acoustic masking and reflections as much as possible.
• Finally, the geometric arrangement of the hydrophones is non-coplanar, enabling angular localization of sources and formation of channels for improved detection of distances.

In some embodiments, at least one hydrophone is a differential hydrophone.

Such embodiments make it possible to enable wired transmission over distances of several hundred meters, for example up the coast or down the Sound Fixing and Ranging channel (of acronym "SOFAR").

In preferred embodiments, the cable comprises a shielding comprising reinforced fibers at least partially cast in the waterproof material.

The reinforced fiber ensure robustness, even in harsh conditions. The fibers are distributed throughout the device subject of the invention and cast in the waterproof material to ensure that tensile forces are evenly distributed throughout the transducer enabling the device to be tracked by the power supply and data transmission cable.

In preferred embodiments, the hydrophones and the inertial measuring unit are mounted on an electronic board, at least part of the reinforced fibers of the shielding being attached to the electronic board.

Thanks to these embodiments, the cable absorbs forces on the electronica board and prevents transmission of mechanical surface noise to the sensors via the cable.

In preferred embodiments, wherein the cable comprises a separate pair of conductors for each of the hydrophones and for the inertial measurement, each conductor being electrically isolated from the others.

Thanks to these embodiments, there is no interference between the signals transmitted from each of the sensors.

In preferred embodiments, the waterproof material presents an ellipsoidal shape.

Thanks to these embodiments, the surface of the device is as smooth as possible to avoid disruption of acoustic paths. Moreover, the device subject of the invention presents low drag in a marine current and can be laid on the ground without additional fixings. Moreover, the device subject of the invention presents a low risk of trawling or line entanglement.

In other embodiments, the waterproof material presents a shape comprising :
- two opposed wings of standardized airfoil shape, each wing housing a hydrophone,
- a body placed between the two wings housing another hydrophone, forming a triangle with the hydrophones of each wing,
- an appendage placed perpendicularly to the plane comprising the triangle formed by the hydrophones in each wing and the body, housing the fourth hydrophone.

Thanks to these embodiments, the device subject of the invention can be submitted to high-speed towing while having very low drag. Moreover, the towing speed can exceed 20 nautical knots. Risks of cavitation when towing are also avoided even at moderate speeds of approximately 10 nautical knots.

Moreover, these embodiments allow for a movement at the surface of the body of water. These embodiments allow for a compromise between the dive due to the weight of the cable and the lift of the chosen wing profile.

In some embodiments, at least four hydrophones are placed at the vertices of a regular tetrahedron.

Thanks to these embodiments, isotropic measurements can be performed.

According to a second aspect, the present invention aims at a system for detecting the position of a source of acoustic waves in an underwater environment, comprising:
- at least one device for measuring acoustic data subject of the invention and
- at least one processing device connected to the cable of the device for measuring data for receiving each value measured by each device for measuring acoustic data and to provide electricity to power each hydrophone and the inertial measuring unit of each device for measuring acoustic data, said processing device comprising :
   - at least one power source,
   - at least one storage means for storing each measured value received,
   - at least one geolocation device configured to capture a value representative of a position of the processing device in a terrestrial reference frame,
   - at least one processing unit for estimating the position of a source of acoustic waves with regards to the position of the processing device and at least one device for measuring acoustic data, depending on the measured value received from said at least one device for measuring acoustic data, the values measured by the inertial measuring unit and the value representative of the position of the processing device in a terrestrial reference frame.

Thanks to these embodiments, the system can be easily deployed by a single person, without prior installation: this drastically reduces the cost and complexity of missions.

The system can also be released or temporarily immerged by naval airborne means to focus on a precise area to be analyzed, as in the case of buoys and spinnerets, for example. An example of use is to drop the system into a group of cetaceans to study their interactions in detail.

More generally, the real-time analysis of detections and their recognition on an on-board processing device, and phase analyses by the small size of each measuring device subject of the invention, makes it possible to locate each source in real time via a deployment of several systems spaced a half-nautical mile to two nautical miles apart, and thus to dynamically deform and optimize the geometry of the system.

Moreover, the system presents a limited overall weight, of less than two kilograms without the cables and power supplies, a very small footprint, a wide range of uses, from military personnel to whale watchers and yachtsmen.

Moreover, the system subject of the invention provides a very high synchronization accuracy counted in nanoseconds between all deployed instances, using satellite pulse per second signals or an atomic clock.

Also, the system subject of the invention provides excellent acoustic quality and frequency sampling.

Finally, the processing device can be linked to a number N of antennas and thus cross-referencing the azimuth and elevation of each to the position of the source in 3D, by N real-time calculations, therefore in real time. A system comprising several measuring devices and processing devices enables continuous coverage of a large-scale marine territory, allowing sources to be tracked over very long distances and alerts to be generated.

According to a third aspect, the invention aims at a method for detecting the position of a source of acoustic waves in an underwater environment comprising at least the following steps :
- measuring acoustic data and values representative of orientation, position, speed and/or acceleration of the device in the underwater environment by a device for measuring acoustic data subject of the invention,
- capturing a value representative of a position of the processing device in a terrestrial reference frame,
- estimating the position of a source of acoustic waves with regards to the position of the processing device and at least one device for measuring acoustic data, depending on the measured value received from said at least one device for measuring acoustic data, the values measured by the inertial measuring unit and the value representative of the position of the processing device in a terrestrial reference frame.

The advantages of said method correspond to the advantages of the respective system.

According to a fourth aspect, the present invention aims at a method for assembling a device for measuring acoustic data in an underwater environment subject of the invention, comprising at least the following steps :
- positioning at least four hydrophones in a tetrahedral configuration on a structure comprising an electronic board,
- connecting each hydrophone and at least one inertial measuring unit to the electronic board,
- connecting a cable for transmitting each value detected to at least one measured value to a processing device, and for providing electricity from an external power source to power each hydrophone and the inertial measuring unit to the electronic board,
- immersing each hydrophone and the inertial measuring unit are immersed in a waterproof material with an acoustic index corresponding to the acoustic index of the environment.

In some embodiments, the cable comprises a shielding comprising reinforced fibers at least partially cast in the waterproof material.

In some embodiments, the method for assembling subject of the invention further comprises, before the step of immersing, a step of attaching at least part of the reinforced fibers of the shielding to the electronic board.

In some embodiments, the method for assembling subject of the invention further comprises, after the step of attaching and before the step of immersing, a step of stretching the reinforced fibers of the shield.

In some embodiments, during the step of connecting the cable, the cable is attached to the electronic board according to a sinuous path.

The advantages, particular characteristics and embodiments of said method correspond to the respective system and device subject of the present invention.

### BRIEF DESCRIPTION OF THE DRAWINGS

Other advantages, purposes and particular characteristics of the invention shall be apparent from the following non-exhaustive description of at least one particular embodiment of the present invention, in relation to the drawings annexed hereto, in which:
Figure 1 represents, schematically and in perspective, a first embodiment of the device subject of the present invention,
Figure 2 represents, schematically and in perspective, a second embodiment of the device subject of the invention,
Figure 3 represents, schematically and in perspective, a third embodiment of the device subject of the present invention,
Figure 4 represents, schematically, a first embodiment of a processing device subject of the present invention,
Figure 5 represents, schematically, a first embodiment of a system subject of the present invention,
Figure 6 represents, schematically and in the form of a flowchart, a first embodiment of a method for detecting the position of a source of acoustic waves subject of the present invention, and
Figure 7 represents, schematically and in the form of a flowchart, a first embodiment of a method for assembling a device subject of the invention.

### DETAILED DESCRIPTION OF THE INVENTION

This description is not exhaustive, as each feature of one embodiment may be combined with any other feature of any other embodiment in an advantageous manner. Also, various inventive concepts may be embodied as one or more methods, of which an example has been provided. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

The indefinite articles 'a' and 'an', as used herein in the specification and in the claims, unless clearly indicated to the contrary, should be understood to mean 'at least one'.

The phrase 'and/or', as used herein in the specification and in the claims, should be understood to mean 'either or both' of the elements so conjoined, i.e., elements that are conjunctively present in some cases and disjunctively present in other cases. Multiple elements listed with 'and/or' should be construed in the same fashion, i.e. 'one or more' of the elements so conjoined. Other elements may optionally be present other than the elements specifically identified by the 'and/or' clause whether related or unrelated to those elements specifically identified. Thus, as a non-limiting example, a reference to 'A and/or **B',** when used in conjunction with open-ended language such as 'comprising' can refer, in one embodiment, to A only (optionally including elements other than B); in another embodiment, to B only (optionally including elements other than A); in yet another embodiment, to both A and B (optionally including other elements)

As used herein in the specification and in the claims, 'or' should be understood to have the same meaning as 'and/or' as defined above. For example, when separating items in a list, 'or' or 'and/or' shall be interpreted as being inclusive, i.e., the inclusion of at least one, but also including more than one, of a number or list of elements, and, optionally, additional unlisted items. Only terms clearly indicated to the contrary, such as 'only one of' or 'exactly one of', or, when used in the claims, 'consisting of', will refer to the inclusion of exactly one element of a number or list of elements. **In** general, the term 'or' as used herein shall only be interpreted as indicating exclusive alternatives (i.e. 'one or the other but not both') when preceded by terms of exclusivity, such as 'either,' 'one of,' 'only one of', or 'exactly one of'. 'Consisting essentially of,' when used in the claims, shall have its ordinary meaning as used in the field of patent law.

As used herein in the specification and in the claims, the phrase 'at least one', in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase 'at least one' refers, whether related or unrelated to those elements specifically identified. Thus, as a non-limiting example, 'at least one of A and B' (or, equivalently, 'at least one of A or B', or, equivalently 'at least one of A and/or B') can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements).

In the claims, as well as in the specification above, all transitional phrases such as 'comprising,' 'including,' 'carrying,' 'having,' 'containing,' 'involving,' 'holding,' 'composed of', and the like are to be understood to be open-ended, i.e., to mean including but not limited to. Only the transitional phrases 'consisting of' and 'consisting essentially of' shall be closed or semi-closed transitional phrases, respectively.

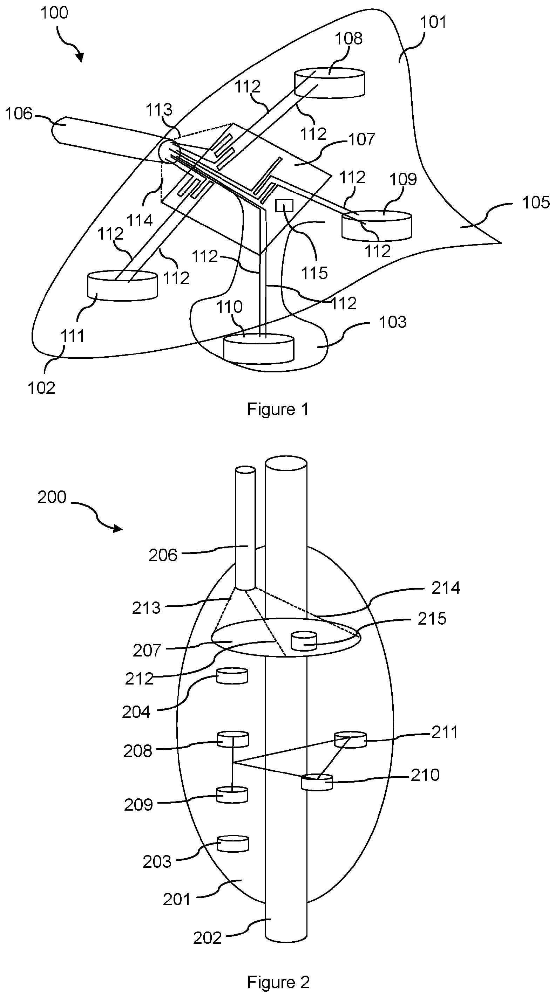

It is stated here that the figures are not up to scale. Also, in the following description "up", "upward", "top", designates what is at the top of figures 1 to 5, "down", "downwards" or "bottom" designates what is at the bottom of figures 1 to 5, "left" designates what is on the left of figures 1 to 5 and "right" designates what is on the right of figures 1 to 5.

Figure 1 represents, schematically and in perspective, a device 100 for measuring acoustic data in an underwater environment comprising :
- at least four hydrophones, 108, 109, 110, 111, positioned in a tetrahedral configuration and designed to measure values representative of sound signals in the underwater environment,
- at least one inertial measuring unit 115 configured to measure values representative of orientation, position, speed and/or acceleration of the device 100 in the underwater environment,
- a cable 106 for transmitting each measured value to a processing device 400, and for providing electricity from an external power source 402 to power each hydrophone and the inertial measuring unit, and
wherein the device is such that each hydrophone, 108, 109, 110, 111, and the inertial measuring unit 115 are immersed in a waterproof material 105 with an acoustic index corresponding to the acoustic index of the environment.

In the device 100 the distances between two hydrophones; 108, 109, 110, 111, is smaller than twenty centimeters. This limits Time Delay Of Arrival (TDOA) between hydrophones, drastically reducing the search space for correlations and therefore the algorithmic cost of calculating source positioning, making it possible in real time on power-limited architectures.

Preferably, each hydrophone, 108, 109, 110, 110 is a differential hydrophone, enabling wired transmission over distances of several hundred meters, for example up the coast or down the SOFAR underwater channels.

In preferred embodiments, each hydrophone is a magnetostriction hydrophone.

In preferred embodiments, the acoustic bandwidth of the hydrophones ranges from a frequency of approximately 1Hz called "ultra-low frequency" to a frequency of 300 kHz, called "ultra-high frequency". Such frequencies allow for underwater detection of stealth propulsion systems and spatial detection and tracking of solid displacement pulses or transients, airlock openings, for example.

In the device 100 represented in figure 1, four hydrophones, 108, 109, 110, 111, are represented and positioned in a tetrahedral configuration. In other words, the hydrophones are positioned such that the center of gravity of the hydrophones, 108, 109, 110 and 111, are non-coplanar. Such positioning enables angular localization of sources and formation of channels for improved detection of distances.

In particular embodiments, the four hydrophones, 108, 109, 110 and 111, are placed at the vertices of a regular tetrahedron enabling for isotropic measurements.

In other embodiments, the four hydrophones, 108, 109, 110 and 111, are placed in an ambisonics arrangement in order to form channels by simple algebraic operation, facilitating long-range detection in real time.

It should be reminded here that hydrophones are defined by an axis defining the orientation of the hydrophone, and therefore the direction in which the hydrophone detects acoustic waves.

In addition to the positioning of the hydrophones, 108, 109, 110 and 111, in embodiments, the hydrophones, 108, 109, 110 and 111 are oriented according to identical axial orientation. In other words, the axes of the hydrophones are parallel. Such an orientation reproduces the functioning of focused transducers and provide almost identical signals captured by each hydrophone, 108, 109,110 and 111, which are easy to correlate for TDOA extraction.

In embodiments, the hydrophones are oriented according to a spherical orientation, in which each hydrophone, 108, 109, 110 and 111, has an axis oriented towards the center of the inscribed sphere in a manner known to one skilled in the art. In other words, the axes of the hydrophones intersect at the center of said sphere. The non-isotropy property of a cell radiation pattern of a hydrophone is used to coarsely detect an emission direction, which is useful for low frequencies that are difficult to detect by correlation.

In the embodiment represented in figure 1, the device 100 comprises four hydrophones. However, in other embodiments (not represented), the device 100 can comprise more than four hydrophones, at least four of which are positioned according in a tetrahedral configuration.

In preferred embodiments, the inertial measurement unit is a 9-axis inertial measurement unit also known as a 9-degree-of-freedom inertial measurement unit known to one skilled in the art. The inertial measurement unit 115 comprises a gyroscope, a magnetometer and an accelerometer.

In preferred embodiments, the device 100 also comprises, within the waterproof material 105, a pressure sensor to analyze surface echoes, thus multiplying delay measurements with virtual hydrophones formed by the echoes of each source on the surface. The cable 106 is therefore also configured to transmit each value detected to at least one measured value to a processing device, and for providing electricity from an external power source to power said pressure sensor. The value of pressure measured by the pressure sensor can be used to determine the depth at which the device 100 is placed.

In preferred embodiments, the device 100 also comprises, within the waterproof material 105, a ferromagnetic anomaly detector by placing a number N of at least four magnetometers non-coplanar in the waterproof material 105. The cable 106 is therefore also configured to transmit each value detected to at least one measured value to a processing device, and for providing electricity from an external power source to power said pressure sensor.

Within the waterproof material, the hydrophones, 108, 109, 110 and 111, are preferably attached to a structure 107 comprising an electronic board. The structure 107 provides a junction between the cable 106 and the sensors. Hereafter "sensors" designates either the hydrophones, 108, 109, 110, 111, or the inertial measurement unit 115, the optional pressure sensor and the optional ferromagnetic anomaly detector. In preferred the hydrophones, 108, 109, 110, 111 and the inertial measuring unit 115 are mounted on the electronic board.

In preferred embodiments, the electronic components and materials of the structure and electronic board are designed to minimize acoustic masking. For example, the material of the structure and/or the electronic board have an impedance similar to the impedance of water. Moreover, random perforations and chamfers on the structures and/or on the electronic board can be performed.

The cable 106 comprises two conductors 112 per sensor. Each conductor 112 is placed within an isolation sleeve configured to electromagnetically isolated the conductor 112.

In preferred embodiments, the cable 106 comprises a shielding surrounding all of the conductors 112 and comprising reinforced fibers, 113 and 114, at least partially cast in the waterproof material. Moreover, the cable 106 can comprise a jacketing layer around the shielding so as to waterproof the cable 106 and maintain the integrity of the cable 106.

In preferred embodiments, the reinforced fibers are high tensile strength fibers such as Kevlar ^{®} fiber to ensure robustness, even in harsh conditions. Preferentially, at least part of the reinforced fibers of the shielding are attached to the electronic board.

The cable 106 ensures data transmission, power supply and mechanical strength. Signals from the hydrophones, 108, 109, 110, 111, are transmitted over electromagnetically shielded conductors 112 as are digital signals from the IMU 115, which are transmitted via a transmitter enabling transmission over several kilometers. Such a transmitter is, for example, an additional electronic component allowing to transfer data using standard protocols such as Universal Asynchronous Receiver Transmitter (of acronym "UART"), a Serial Peripheral Interface (of acronym "SPI"), or an Inter-Integrated Circuit (of acronym "I2C") on several kilometers.

In preferred embodiments, the reinforced fibers are distributed before being cast in the waterproof material 105 to ensure that tensile forces are evenly distributed throughout the device 100. The fibers can also be bonded to the electronic board to ensure the cable is partially immersed in the waterproof material 105. In preferred embodiments, the reinforced fibers are stretched before being immersed in the waterproof material 105 to absorb the forces on the structure. Therefore, the cable 106 remains flexible to prevent the transmission of mechanical surface noise to the sensors via the cable 106.

In preferred embodiments, the conductors 112 are connected to the electronic board along a longer path than a direct connection. Such embodiments avoid breaking the conductors 112 and/or the connection between the conductors 112 and the electronic board when the structure is subjected to high stress due to high-speed movement or impact, for example. In the embodiment represented in figure 1, the conductors 112 follow a winding path, or sinuous path, on the electronic board before being connected to the hydrophones, 108, 109, 110, 111.

In preferred embodiments, the waterproof material 105 is a non-magnetic resin with an acoustic index close to that of water. Preferentially, the waterproof material 105 is cast in one piece. Such embodiments ensure that no movement of the sensors is possible.

The non-magnetic nature of the device 100 means that it contains a minimum of ferrous metals, so as not to locally deviate the magnetic field to be. This improves angular positioning accuracy in relation to the earth's magnetic field. Moreover, the device 100 does not contain a battery, to avoid the presence of any metallic mass, and is connected by the cable 106 which ensures data transmission and power supply.

In preferred embodiments, the acoustic index of the resin used is close to that of water, to avoid interfaces between media, which would create reflections and signal weakening. The absence of connectors prevents acoustic masking. The geometric configuration of sensors and electronic boards is designed to avoid acoustic masking and reflections as far as possible.

In addition to its acoustic properties, the resin 105 is also shock-absorbent, making the device 100 robust enough to be used in harsh conditions. For example, the resin 105 can by polyurethane.

Moreover, given the disposition of the cable and sensors, the resin ensures a perfect watertight seal, further enhancing the robustness of the whole unit.

Preferably, the hydrophones, 108, 109, 110 and 111, are placed surrounding the electronic board 107 and the inertial measurement unit 115 is placed at the center of the electronic board. Even more preferably, the inertial measurement unit 115 is placed as close as possible to the connection between the cable and the electronic board so as to avoid interfering with analog signals from hydrophones on the periphery.

In embodiments, the electronic board 107 comprises an amplifier to amplify the signals issued from the hydrophones, 108, 109, 110 and 111.

The shape of the device 100 represented in figure 1, comprises:
- two opposed wings, 101 and 102, of standardized airfoil shape, each wing housing a hydrophone, respectively 108 and 111,
- a body placed between the two wings, 101 and 102, housing another hydrophone 112, forming a triangle with the hydrophones, 108 and 111, of each wing, 101 and 102,
- an appendage 103 placed perpendicularly to the plane comprising the triangle formed by the hydrophones, 108, 109 and 111, in each wing, 101 and 102, and the body, housing the fourth hydrophone 110.

The body defines a plane of symmetry of the device 100 and the appendage is placed below the body in and its center of gravity is in the plane of symmetry of the device 100.

The device 100 resembles the shape of a manta ray, the cable 16 being placed near where the head of the manta ray would be, opposite the hydrophone 112, placed near the tail of the manta ray. The appendage 103, is placed near the center of gravity of the set comprising the boy and the wings, 101 and 102 and resembles the keel of a ship housing the hydrophone 110 at a distal end.

In preferred embodiments, the standardized airfoil shape corresponds to a standardized profile developed by the National Advisory Committee for Aeronautics (NACA) of the United States of America. Such embodiments enable high speed towing, for example at speed higher than 20 nautical knots with very low drag. Moreover, no cavitation happens at moderate speed, for example equal to or less than 10 nautical knots. For example, the wings have a profile corresponding to the profile NACA 2517. The profile of the wings is defined according to the axis of symmetry.

Moreover, when towed by the cable 106, the shape described above is maintained at the surface of a body of water, due to a compromise between the dive of the device 100 due to the weight of the cable and the lift of the chosen wing, 101 and 102, profile.

In some embodiments, the device 100 comprises a means to adjust the position of the cable 106. For example, the cable 106 is equipped with a line hooked onto a hook placement cast in the waterproof material. The dragging force is therefore applied at a different point of the device 100, without moving the location of the attachments of the cable 106 within the waterproof material 105.

Figure 2, represents, schematically and in perspective, a second embodiment of the device 200 subject of the present invention.

The device 200 for measuring acoustic data in an underwater environment comprising :
- at least four hydrophones, 208, 209, 210, 211, positioned in a tetrahedral configuration and designed to measure values representative of sound signals in the underwater environment,
- at least one inertial measuring unit 215 configured to measure values representative of orientation, position, speed and/or acceleration of the device 200 in the underwater environment,
- a cable 206 for transmitting each value detected to at least one measured value to a processing device 400, and for providing electricity from an external power source 402 to power each hydrophone and the inertial measuring unit, and
wherein the device is such that each hydrophone, 208, 209, 210, 211, and the inertial measuring unit 215 are immersed in a waterproof material 201 with an acoustic index corresponding to the acoustic index of the environment.

The embodiments of the waterproof material 201, the hydrophones, 208, 209, 210, 211, 204 and 203, the inertial measurement unit 215, the cable 206 and its reinforced fibers, 213 and 214, are similar to those described above with regards to figure 1. However, their layout and the shape of waterproof material 201 differ from the embodiment of figure 1. Moreover, the device 200 represented in figure 2 comprises six hydrophones, 208, 209, 210, 211, 204 and 203, and an additional optional structural element 202.

As represented, the device 200 comprise an internal structural axis 202 configured to support the structure 207 comprising the electronic board as well as each sensor, 203, 204, 208, 209, 210, 211. The axis 202 is preferably a metal or plastic rod on which the sensors and structure 207 are assembled are predetermined positions by means known to one skilled in the art.

Four hydrophones, 208, 209, 210 and 211 are positioned in a tetrahedral configuration. Two additional hydrophones, 203 and 204, are aligned with two of the hydrophones, 208 and 209, positioned in a tetrahedral configuration. The two additional hydrophones, 203 and 204, can be placed so as to correspond to a logarithmic curve with hydrophones 208 and 209.

In figure 2, the conductors are not represented.

The waterproof material 201 presents an ellipsoidal shape, the cable 106 being immersed in the material at the top of the ellipsoidal shape next to the axis 202 and parallelly to the axis 202. The axis 202 can be fully immersed in the waterproof material 201. In other embodiments, the axis 202 sticks out at the top and/or bottom of the waterproof material 201.

The axis 202 can be provided with attachment means, such as a notch, for easy attachment to a mooring line, or as a chain in the case of a towed array. Such embodiments can be mounted on a boat hull. Such embodiments allow the device 200 to be fixed along a mooring line without adding tension to the line and limit friction and therefore noise, as well as shocks along the line.

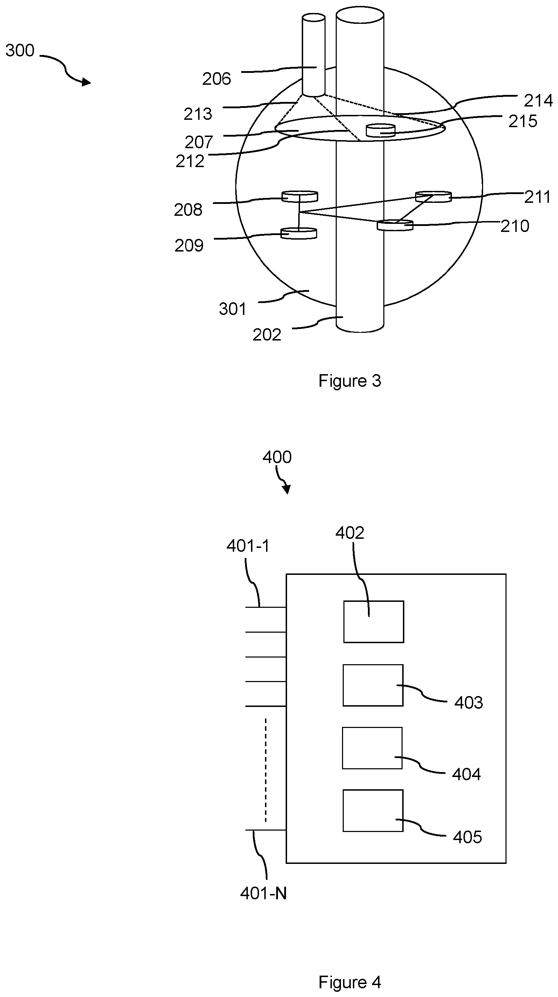

Figure 3, represents, schematically and in perspective, a third embodiment of the device 300 subject of the present invention.

The elements having the same reference number in figures 2 and 3 are the same elements. Figure 3 differs from figure 2 in that the waterproof material 201 has the shape of a sphere and only comprises four hydrophones, 208, 209, 210 and 211, in a tetrahedral configuration.

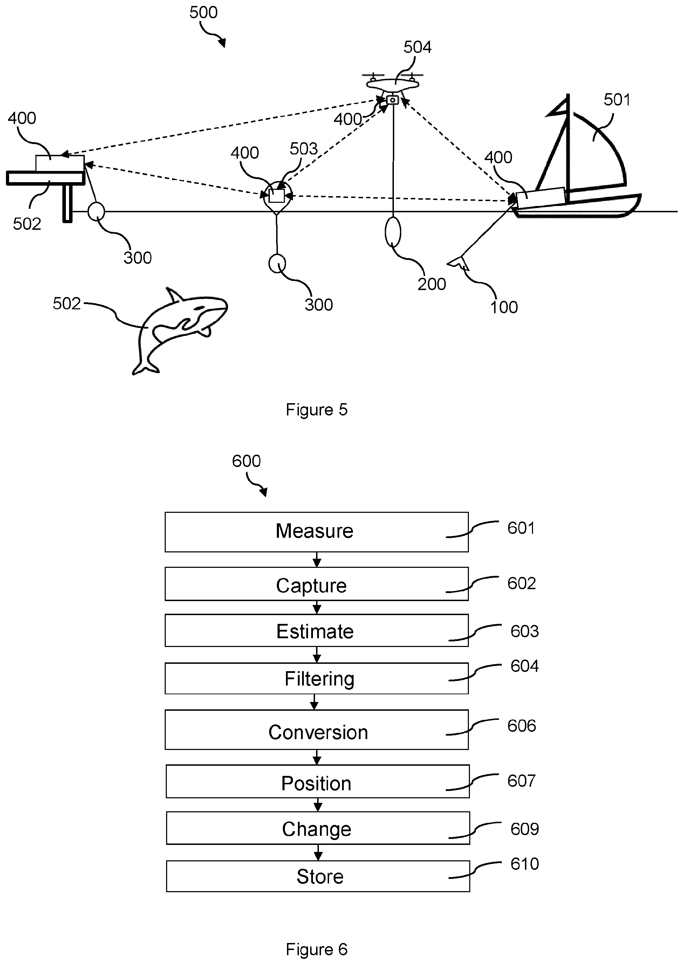

Figure 4, represent, schematically a processing device 400 for a system 500 subject of the present invention, represented in figure 5.

The processing device 400 comprise a number N of connection means 401-1 to 401-N to connect a number N of cables 106 or 206 of devices, 100, 200 or 300 subject of the invention.

The connection means 401-1 to 401-N are configured for receiving each value measured by each device, 100, 200 and/or 300, for measuring acoustic data and to provide electricity to power each hydrophone, 108, 109, 110, 111, 208, 209, 210 211, 203, 204, and the inertial measuring unit, 115 or 215, of each device, 100, 200 and/or 300 for measuring acoustic data.

In preferred embodiments, one processing device 400 is connected to one device for measuring acoustic data 100, 200 or 300.

The processing device 400 comprises
- at least one power source 402,
- at least one storage 403 means for storing each measured value received,
- at least one geolocation device 404 configured to capture a value representative of a position of the processing device in a terrestrial reference frame,
- at least one processing unit 405 for estimating the position of a source of acoustic waves with regards to the position of the processing device 400 and at least one device, 100, 300, for measuring acoustic data, depending on the measured value received from said at least one device for measuring acoustic data, the values measured by the inertial measuring unit and the value representative of the position of the processing device in a terrestrial reference frame.

Particular implementation details of the above means are disclosed in regard to corresponding steps, such as those disclosed in the description of figure 6. As it is understood, the processing means 405 may be a software element ran by a computing system in charge of executing an algorithm corresponding to the corresponding step. The computing system hosting the processing means 405 can comprise elements known to one skilled in the art to input elements or display elements, such as a keyboard and a screen. For example, the computing system can be a digital tablet, a smartphone or a portable computer.

The storage means 403 may be hosted locally or remotely. Such a storage means 403 corresponds to any digital registry or memory, such as a hard drive or random access memory.

The geolocation device 404 can be any type of geolocation device known to one skilled in the art giving the position of an object in a terrestrial referential.

In preferred embodiments, the processing device 400 has access to a pulse per second signal or an atomic clock to timestamp the values received.

In embodiments wherein the device, 100, 300, comprises additional sensors, the processing device 400 provides electricity to power each additional sensor.

In preferred embodiments, the power source 402 is a power source providing electricity. For example, the power source can be a generator, a battery, or a renewable energy generator such as a solar panel or a wind turbine.

Processing device 400 can preferably be placed on a buoy or surface vessel in order to receive geolocation data and transmit and/or share the position of a source 502 of acoustic waves estimated. In embodiments, the processing device 400 is placed in an underwater tube or glider or carried by a diver, in which case it does not transmit information but records and/or analyzes signals autonomously and/or displays processed information (detection, angular localization, etc.).

In preferred embodiments, the processing device 400 comprises a communication means, such as a wireless communication means so as to communicate at least part of the measured values and/or the processed values to at least another processing device 400 and/or a remote server.

Figure 5 represent, schematically a system 500 for detecting the position of a source 502 of acoustic waves in an underwater environment, characterized in that it comprises:
- at least one device, 100, 300, for measuring acoustic data according to any of the embodiments previously described and
- at least one processing device 400 connected to the cable, 106, 206, of the device, 100, 300 for measuring data for receiving each value measured by each device, 100, 300, for measuring acoustic data and to provide electricity to power each hydrophone, 108, 109, 110, 111, 208, 209, 210, 211, and the inertial measuring unit, 115 or 215, of each device, 100, 300 for measuring acoustic data.

In the system 500 represented, four processing devices 400 are represented:
- a first processing device 400 is placed on a dock 502 and connected to a device 300 as represented in figure 3,
- a second processing device 400 is placed inside a buoy 503 and connected to a device 300 as represented in figure 3,
- a third processing device 400 is placed inside a drone 504 and connected to a device 200 as represented in figure 2,
- a fourth processing device 400 is placed on a boat 501 and connected to a device 100 as represented in figure 1.

As understood, the system 500 can comprise more than one processing device 400 and a number N of devices, 100, 200 and/or 300 each connected to one processing device 400.

The system 500 implements the method 600 represented in figure 6.

In other embodiments, a device 100, 200 and/or 300 can be attached to a flying device comprising the processing device 400. The flying device 504 can be a drone, a helicopter or any other type of aircraft. In these embodiments, the device 100, 200 and/or 300 can be immersed in the underwater environment at a first location, in order to perform measurements, then taken out of the underwater environment and moved to a second location to perform other measurements.

In the system 500 each of the devices for measuring acoustic data can be replaced by any embodiment described above with regards to figures 1 to 3.

On figure 5, part of the possible exchanges of processed and/or measured data between processing devices 400.

Figure 6 represents a method 600 for detecting the position of a source 502 of acoustic waves in an underwater environment comprising at least the following steps :
- measuring 601 acoustic data and values representative of orientation, position, speed and/or acceleration of the device in the underwater environment by a device for measuring acoustic data 100, 200 and/or 300,
- capturing 602 a value representative of a position of the processing device 400 in a terrestrial reference frame,
- estimating 603 the position of a source of acoustic waves with regards to the position of the processing device 400 and/or at least one device, 100, 200, 300, for measuring acoustic data, depending on the measured value received from said at least one device, 100, 200, 300, for measuring acoustic data, the values measured by the inertial measuring unit, 115, 315, and the value representative of the position of the processing device 400 in a terrestrial reference frame.

The step of measuring is performed by each hydrophone, 108, 109, 110, 111, 203, 204, 208, 209, 210, 211 and the inertial measurement unit 115, 215 or the device 100, 200 and/or 300.

The step of capturing 602 is performed by the geolocation device 404 of the processing devices 400.

In the following description of the step of estimating 603, a channel refers to the measured data issued from one device for measuring acoustic data, 100, 200 or 300. A signal refers to measured data on a channel. A signal can be a spectrogram or a time signal.

During the step of estimating 603, for each channel, a signal analysis is performed. Said signal analysis uses a machine learning model to detect a pattern representative of the presence of a source of underwater acoustic source. Moreover, during the signal analysis, an identification of the type of source of underwater acoustic waves can be performed.

When a pattern is detected, the method 600 comprises a step of filtering 604 is performed so as to keep only the frequencies corresponding to the detected pattern. Said step of filtering is performed on each channel.

The method 600 further comprises a step of correlation 605 the filtered time signals to determine the Time Difference Of Arrival (of acronym "TDOA") for each channel.

The method 600 comprises a step of conversion 606 of each TDOA into a source of underwater acoustic waves direction angle in the reference frame of the device for measuring, 100, 200 or 300, acoustic data associated with the channel based on the values measured by the inertial measurement unit 115 or 215 of said device for measuring, 100, 200 or 300, acoustic data.

The step of conversion 606 is performed by conversion from a quaternion to a Euleurian reference frame using equations known to one skilled in the art.

During the step of processing 603, and preferably in parallel to the step of conversion 606, the method 600 comprises a step of positioning 607 the device, 100, 200, 300, in a terrestrial reference frame.

For example, each inertial measurement unit detects, in its reference frame, a magnetic field vector, an acceleration vector and a rotation speed vector according to three perpendicular axes commonly named "X", "Y" and "Z" in related prior art.

The magnetic field vector is subtracted from an offset according to each axis, X, Y and Z, characteristic of the magnetometer in question. This offset is obtained through an initial calibration procedure in which a user rotates the sensor on itself in all directions, away from any magnetic source, so that the earth's magnetic field travels around a sphere in the IMU's frame of reference. This sphere is then characterized by its center and radius: the center is the magnetometer offset. By subtracting the value of this offset, the magnetic field measurements are then centered on the point (0,0,0) corresponding to a zero field. Such a calibration procedure can also be used to measure any local deformation of the magnetic field due to a hard iron effect, resulting in local deformation of the sphere. This deformation can be software-compensated to ensure that the earth's magnetic field describes a sphere with a center (0,0,0) when the sensor is rotated on itself in all directions. These calibration data are characteristic of the magnetometer used and are stored in the processing device's 400 storage means 403.

The bias corresponding to the mean value of the gyroscope output at rest, when no motion of the gyroscope is performed, is subtracted from the rotation speed vector. A calibration procedure during phases without motion of the gyroscope can be performed automatically or triggered manually by the user, for example by pressing a button on a user interface of the processing device 400.

Once the biases have been removed, the rotation speeds are multiplied by a constant coefficient called the scaling factor. This scaling factor corresponds to a measurement error: when the sensor is rotated X degrees on an axis and the value of the rotation speed on this axis is integrated, X degrees should also be found. If the scale factor is not equal to 1, then another Y value is found. The scale factor on this axis, corresponding to the correction to be applied to obtain the correct value, is in this case Y divided by X. The scale factor changes very little over the life of the sensor or as a function of temperature, so it can be calibrated once and for all at the factory by rotating the sensor through a fixed angle and measuring the perceived angle of rotation. This correction is performed on each axis and stored in the processing device's 400 storage means 403. It should be noted that this correction is a plus, but is not essential when the inertial measurement unit contains a magnetometer, as the latter gives an absolute direction without integration.

Acceleration vector offset is also compensated at rest, using the same method as for a magnetic field vector offset. Accelerometer offsets are stored in the processing device's 400 storage means 403.

Once the data from the inertial measurement unit has been filtered, it is merged using a Magdwick filter, which works as explained below.

The method combines sensor measurements using a quaternion-based approach and a gradient-descent filter to correct for gyroscope drift. Acceleration, including gravity, is used to estimate inclination known as "roll" and "pitch", but can be noisy in the event of dynamic movements. The magnetometer provides a reference to the earth's magnetic field for estimating heading known as "yaw". Finally, the gyroscope provides angular velocity, correcting noise due to dynamic movements on the accelerometer. All these operations are carried out jointly in the Magdwick filter, which has low computational complexity but good accuracy, making it effective and relevant for on-board applications.

The result is a quaternion for finding the Eulerian angles of the device's 100, 200, 300, orientation in a local terrestrial reference frame defined by magnetic North, gravity and a 3^{th} vector orthogonal to the first two. The equations for converting the quaternion to the Eulerian reference frame are known to one skilled in the art.

Once the step of conversion 606 and the step of positioning 607 have been carried out, the direction of the source in the local terrestrial reference frame is obtained by changing 608 the reference frame.

In optional embodiments, a third change of reference frame is possible if a Global Navigation Satellite System (of acronym "GNSS") is available to the processing device 400, which then provides the line on which the source is located in the absolute terrestrial reference frame.

In optional embodiments, the method 600 comprises a step of synchronization of recordings via GNSS or a precision clock such as an atomic clock.

In optional embodiments, the method 600 comprises a step of performing a three-dimensional geolocation of the source of underwater acoustic waves. Said step requires a system comprising at least two procession devices 400 each couples to at least one device 100, 200, 300, subject of the invention. The processing device 400 establish a communication to share angular geolocation information, preferably in real time.

In preferred embodiments, each position estimated is stored 609 on the processing device's storage means 403.

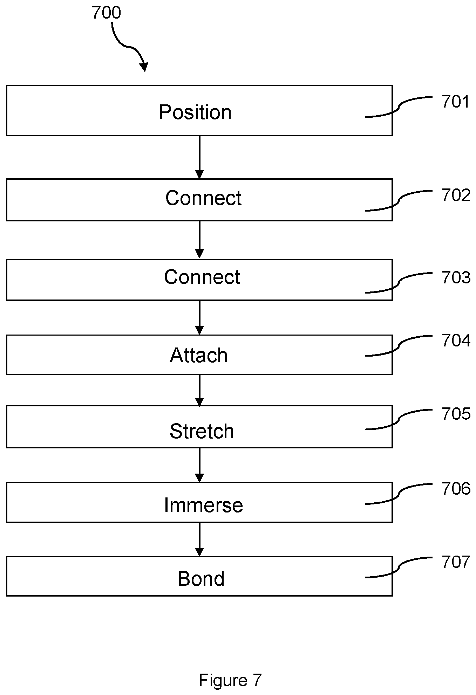

Figure 7 represents a method 700 for assembling a device, 100, 200, 300, for measuring acoustic data in an underwater environment according to the present invention, comprising at least the following steps :
- positioning 701 at least four hydrophones, 108, 109, 110, 111, 203, 204, 208, 209, 210, 211 in a tetrahedral configuration on a structure, 107, 207, comprising an electronic board,
- connecting 702 each hydrophone 108, 109, 110, 111, 203, 204, 208, 209, 210, 211 and at least one inertial measuring unit, 115, 215 to the electronic board,
- connecting 703 a cable, 106, 206, for transmitting each measured value to a processing device 400, and for providing electricity from an external power source to power each hydrophone, 108, 109, 110, 111, 203, 204, 208, 209, 210, 211, and the inertial measuring unit, 115, 215, to the electronic board,
- immersing 706 each hydrophone, 108, 109, 110, 111, 203, 204, 208, 209, 210, 211, and the inertial measuring unit, 115, 215, are immersed in a waterproof material, 105, 201, with an acoustic index corresponding to the acoustic index of the environment.

During the step of positioning 701, each sensor is positioned on a structure at a predetermined position. The structure can be preassembled so as to position the sensors at precise locations and according to precise orientations such as those described with regards to figures 1 to 3.

During the steps of connecting, 702 and 703, the sensors and the conductors 112 of the cable, 106, 206, are connected to an electronic board ensuring the electric connection between the sensors and the cable.

The structure comprising the electronic board and the sensors is then placed in a mold having a shape corresponding to the shapes described with regards to figures 1 to 3 and the waterproof material is inserted in the mold so as to immerse the structure.

In preferred embodiments, the cable, 106, 206 comprises a shielding comprising reinforced fibers as described above with regards to figures 1 to 3. The cable, 106, 206 is placed in the mold such that when the mold is filled with waterproof material, the shielding, 106, 206 is at least partially cast in the waterproof material.

In preferred embodiments, the waterproof material is a resin. In such embodiments, the method 700 comprises at least one step of bonding 707 the resin. In preferred embodiments, the step of bonding 707 is carried out in vacuum environment to ensure the absence of air bubbles in the bonded resin. Such air bubbles could cause reflections or an attenuation affecting the quality of the signal measured by at least one hydrophone, 108, 109, 110, 111, 203, 204, 208, 209, 210, 211.

In preferred embodiments, the method comprises only one step of immersion 706 and one step of bonding 707 when resin is used as the waterproof material. Such embodiments enable rapid assembly and one-step casting of the entire device 100, 200 or 300.

In other embodiments, the hydrophones and the electronic board are separately immersed in waterproof material substructures so as to maintain the position established during the step of positioning 701. Said substructures then being assembled together by assembling and possibly gluing, and then immersed in the same waterproof to obtain the device 100, 200, 300. When the waterproof material is a resin, each step of immersion is followed by a step of bonding. These embodiments make it possible to obtain a coating made from a single waterproof material, which reduces acoustic reflections, at the cost of a more complex manufacturing procedure. In these embodiments, each substructure is preferably convex so as to avoid trapping air bubbles during final immersion step.

In preferred embodiments, before the step of immersing 706, the method 700 comprises a step of attaching 704 at least part of the reinforced fibers of the shielding to the electronic board. For example, the reinforced fibers can be glued to the electronic board at predefined locations free of electronic circuits. In other embodiments, the fibers are hooked onto the electronic board on preassembled hooks.

In preferred embodiments, after the step of attaching 704 and before the step of immersing 706, the method 700 comprises a step of stretching 706 the reinforced fibers of the shield. By stretching the fibers the forces applied on the cable, such as a traction force, are transferred directly to the structure 107, 207.

In preferred embodiments, during the step of connecting 703 the cable, 106, 206, the cable is attached to the electronic board according to a sinuous path. In such embodiments, the conductors 112 are connected to the electronic board along a longer path than a direct connection. Such embodiments avoid breaking the conductors 112 and/or the connection between the conductors 112 and the electronic board when the structure is subjected to high stress due to high-speed movement or impact, for example.

## Claims

1. Device (100, 200, 300) for measuring acoustic data in an underwater environment **characterized in that** it comprises :
- at least four hydrophones (108, 109, 110, 111, 203, 204, 208, 209, 210, 211) positioned in a tetrahedral configuration and designed to measure values representative of sound signals in the underwater environment,
- at least one inertial measuring unit (115, 215) configured to measure values representative of orientation, position, speed and/or acceleration of the device in the underwater environment ,
- a cable (106, 206) for transmitting each measured value to a processing device (400), and for providing electricity from an external power source to power each hydrophone and the inertial measuring unit, and
wherein the device is such that each hydrophone and the inertial measuring unit are immersed in a waterproof material (105, 201, 301) with an acoustic index corresponding to the acoustic index of the environment.

2. Device (100, 200, 300) according to claim 1, wherein at least one hydrophone (108, 109, 110, 111, 203, 204, 208, 209, 210, 211) is a differential hydrophone.

3. Device (100, 200, 300) according to one of claims 1 or 2, wherein the cable (106, 206) comprises a shielding comprising reinforced fibers (113, 114, 213, 214) at least partially cast in the waterproof material (105, 201, 301).

4. Device (100, 200, 300) according to claim 3, wherein, the hydrophones (108, 109, 110, 111, 203, 204, 208, 209, 210, 211) and the inertial measuring unit (115, 215) are mounted on an electronic board, at least part of the reinforced fibers (113, 114, 213, 214) of the shielding being attached to the electronic board.

5. Device (100) according to one of claims 1 to 4, wherein the cable (106) comprises a separate pair of conductors (112) for each of the hydrophones (108, 109, 110, 111) and for the inertial measurement (115), each conductor being electrically isolated from the others.

6. Device (200, 300) according to one of claims 1 to 5, wherein the waterproof material (201, 301) presents an ellipsoidal shape.

7. Device (100) according to one of claims 1 to 5, wherein the waterproof material (105) presents a shape comprising :
- two opposed wings (101, 102) of standardized airfoil shape, each wing housing a hydrophone (108, 111) ,
- a body placed between the two wings housing another hydrophone (109), forming a triangle with the hydrophones of each wing,
- an appendage (103) placed perpendicularly to the plane comprising the triangle formed by the hydrophones in each wing and the body, housing the fourth hydrophone (110).

8. Device (100, 200, 300) according to any one of claims 1 to 7, wherein at least four hydrophones (108, 109, 110, 111, 208, 209, 210, 211) are placed at the vertices of a regular tetrahedron.

9. System (500) for detecting the position of a source of acoustic waves in an underwater environment, **characterized in that** it comprises:
- at least one device (100, 200, 300) for measuring acoustic data according to one of claims 1 to 8 and
- at least one processing device (400) connected to the cable (106, 206) of the device for measuring data for receiving each value measured by each device for measuring acoustic data and to provide electricity to power each hydrophone (108, 109, 110, 111, 203, 204, 208, 209, 210, 211) and the inertial measuring unit (115, 215) of each device for measuring acoustic data, said processing device comprising :
- at least one power source (402) ,
- at least one storage means (403) for storing each measured value received,
- at least one geolocation device (404) configured to capture a value representative of a position of the processing device in a terrestrial reference frame,
- at least one processing unit (405) for estimating the position of a source of acoustic waves with regards to the position of the processing device and at least one device for measuring acoustic data, depending on the measured value received from said at least one device for measuring acoustic data and the value representative of the position of the processing device in a terrestrial reference frame.

10. Method (600) for detecting the position of a source of acoustic waves in an underwater environment **characterized in that** it comprises at least the following steps:
- measuring (601) acoustic data and values representative of orientation, position, speed and/or acceleration of the device (100, 200, 300) in the underwater environment by a device for measuring acoustic data according to any one of claims 1 to 8,
- capturing (602) a value representative of a position of the processing device (400) in a terrestrial reference frame,
- estimating (603) the position of a source of acoustic waves with regards to the position of the processing device and at least one device for measuring acoustic data, depending on the measured value received from said at least one device for measuring acoustic data, the values measured by the inertial measuring unit and the value representative of the position of the processing device in a terrestrial reference frame.

11. Method (700) for assembling a device (100, 200,300) for measuring acoustic data in an underwater environment according to one of claims 1 to 8, **characterized in that** it comprises at least the following steps :
- positioning (701) at least four hydrophones in a tetrahedral configuration on a structure comprising an electronic board,
- connecting (702) each hydrophone and at least one inertial measuring unit to the electronic board,
- connecting (703) a cable for transmitting each measured value to a processing device, and for providing electricity from an external power source to power each hydrophone and the inertial measuring unit to the electronic board,
- immersing (706) each hydrophone and the inertial measuring unit are immersed in a waterproof material with an acoustic index corresponding to the acoustic index of the environment.

12. Method (700) according to claim 11, wherein the cable (106, 206) comprises a shielding comprising reinforced fibers at least partially cast in the waterproof material.

13. Method (700) according to claim 12, further comprising, before the step of immersing (706), a step of attaching (704) at least part of the reinforced fibers of the shielding to the electronic board.

14. Method (700) according to claim 13, further comprising, after the step of attaching (704) and before the step of immersing (706), a step of stretching (705) the reinforced fibers of the shield.

15. Method (700) according to any one of claims 11 to 14, wherein, during the step of connecting (703) the cable, the cable is attached to the electronic board according to a sinuous path.
